# EUROPEAN PATENT APPLICATION

(11) **EP 1 988 593 A1**
(43) Date of publication of application: **05.11.2008**
(21) Application number: 08102490.3
(22) Date of filing: 11.03.2008
(51) Int. Cl.: H01M 8/06, H01M 8/04

(54) **Desulfurizing device and fuel cell system including the same**

(30) Priority: 30.04.2007 KR 20070042023
(71) Applicant: Samsung SDI Co., Ltd., Suwon-si, Gyeonggi-do (KR)
(72) Inventor: Lee, Yong-Kul Legal & IP Team Samsung SDI Co., LTD., Gyeonggi-do (KR); Kim, Ju-Yong c/o Legal & IP Team Samsung SDI Co., LTD., Gyeonggi-do (KR); Han, Man-Seok c/o Legal & IP Team Samsung SDI Co., LTD., Gyeonggi-do (KR); Lee, Sung-Chul c/o Legal & IP Team Samsung SDI Co., LTD., Gyeonggi-do (KR); Ahn, Jin-Goo c/o Legal & IP Team Samsung SDI Co., LTD., Gyeonggi-do (KR); Kim, Jun-Sik c/o Legal & IP Team Samsung SDI Co., LTD., Gyeonggi-do (KR)
(74) Representative: Killin, Stephen James

(57) **Abstract**

A desulfurizing device for a fuel cell includes a dehydrating element for absorbing moisture in a hydrocarbon fuel, and a desulfurizing element for absorbing a sulfur compound included in the hydrocarbon fuel that flows out of the dehydrating element. In another embodiment, the desulfurizing device for a fuel cell includes a dehydrating element for absorbing moisture included in a fuel, and a desulfurizing element. The desulfurizing element absorbs a sulfur compound included in the fuel flowing out of the dehydrating element if temperature of the desulfurizing element is below a predetermined temperature, and the desulfurizing element desorbs a sulfur compound included in the desulfurizing element whenever the desulfurizing element is heated above the predetermined temperature.

## Description

The present invention relates to a desulfurizing device for a fuel cell and a fuel cell system including the same. More particularly, the present invention relates to a desulfurizing device that can improve desulfurizing efficiency and thereby decrease the volume of a desulfurizing material and its cost, and a fuel cell system including the same.

A fuel cell is a power generation system for producing electrical energy using a hydrocarbon-based fuel. Representative exemplary fuel cells include a polymer electrolyte membrane fuel cell (PEMFC) and a direct oxidation fuel cell (DOFC).

The PEMFC has power characteristics that are superior to those of conventional fuel cells, as well as a lower operating temperature and faster start and response characteristics. Because of these advantages, the PEMFC can be applied to a wide range of applications such as portable electrical power sources for automobiles, distributed power sources for houses and public buildings, and small electrical power sources for electronic devices.

The polymer electrolyte membrane fuel cell system is composed of a stack for a fuel cell body (hereinafter referred to as a "stack" for convenience), a reformer that reforms the fuel to generate hydrogen gas and supplies the hydrogen gas to the stack, and an oxidant supplier for supplying an oxidant gas to the stack. The stack generates electrical energy through an electrochemical reaction of the reformed gas supplied from the reformer and the oxidant gas supplied from the oxidant supplier.

The fuel, such as natural gas, gasoline, diesel, naphtha, fuel oil, and similar hydrocarbon fuels, may include a small amount of a sulfur compound odorizer, such as t-butylmercaptan, tetrahydrothiophene, isopropylmercaptan, and the like, in order to prevent a danger that may happen if the fuel leaks. However, the sulfur compound odorizer can cause severe poisoning to a catalyst for a modifying reaction when the hydrocarbon fuel is used for a fuel cell. Accordingly, it should be removed before the modifying reaction.

The present invention provides a desulfurizing device for a fuel cell having improved desulfurizing efficiency and thereby decreasing the volume of a desulfurizing material and also its cost.

The present invention provides a fuel cell system including the desulfurizing device.

According to one aspect of the present invention, there is provided a desulfurizing device for a fuel cell includes a dehydrating element and a desulfurizing element. A fuel flows through the dehydrating element, and the dehydrating element absorbs moisture included in the fuel. The desulfurizing element absorbs a sulfur compound included in the fuel that flows out of the dehydrating element.

The dehydrating element and the desulfurizing element may be formed in a volume ratio ranging from 1 : 10 to 5 : 3, but according to another embodiment of the present invention, they may have a volume ratio of 1 : 5 to 5 : 5.

The dehydrating element may include a desulfurizing material selected from the group consisting of drierite, A-type zeolite, a silica gel, a molecular sieve 3A, a molecular sieve 4A, a molecular sieve 5A, and combinations thereof.

The desulfurizing material may have a pore size of less than 0.5 nm, but according to another embodiment, it may have a pore size ranging from 0.1 nm to 0.4 nm.

The desulfurizing element may include a desulfurizing material selected from the group consisting of Ag, Cu, Zn, Fe, Co, or Ni supported in hydrophobic zeolite; Ag or Cu supported in Y-type zeolite, ß-type zeolite, or X-type zeolite; a molecular sieve 13X; a copper-zinc-based desulfurizing material; copper supported on a porous carrier; and combinations thereof.

The desulfurizing material may be ion-exchanged with a metal selected from the group consisting of a noble metal, a transition element, and combinations thereof. The noble metal may be selected from the group consisting of Ag, Pt, Pd, and combinations thereof, and the transition element may be selected from the group consisting of Co, Ni, Fe, and combinations thereof.

The desulfurizing material may have a pore size of more than 0.5 nm, but according to another embodiment, it may have one ranging from 0.5 nm to 1.0 nm.

The fuel may include a hydrocarbon fuel. The hydrocarbon fuel may be selected from the group consisting of natural gas, city gas, liquid petroleum gas (LPG), naphtha, and combinations thereof. The sulfur compound may be selected from the group consisting of mercaptan, thiophene, and a combination thereof.

According to another aspect of the present invention, there is provided a desulfurizing device for a fuel cell includes a dehydrating element and a desulfurizing element. A fuel flows through the dehydrating element, and the dehydrating element absorbs moisture included in the fuel. The desulfurizing element absorbs a sulfur compound included in the fuel flowing out of the dehydrating element if temperature of the desulfurizing element is below a predetermined temperature, or desorbs a sulfur compound included in the desulfurizing element whenever the desulfurizing element is heated above the predetermined temperature.

The predetermined temperature may be higher than 200 °C and lower than 400 °C.

According to another aspect of the present invention, a fuel cell system is provided. The fuel cell system includes at least one electricity generating element producing electricity through an electrochemical reaction of a fuel and an oxidant, a fuel supplier supplying the electricity generating element with the fuel, an oxidant supplier supplying the electricity generating element with the oxidant, and a desulfurizing device coupled to the fuel supplier. The desulfurizing device includes a dehydrating element and a desulfurizing element. The fuel flows through the dehydrating element, and the dehydrating element absorbs moisture included in the fuel. The desulfurizing element absorbs a sulfur compound included in the fuel that flows out of the dehydrating element.

The fuel can be supplied from the fuel supplier to the electricity generating element through the desulfurizing device.

The fuel cell system may further include a reformer that can generate hydrogen gas from the fuel. Herein, the fuel may be supplied from the fuel supplier to the reformer through the desulfurizing device.

According to another aspect of the present invention, a fuel cell system includes at least one electricity generating element producing electricity through an electrochemical reaction of a fuel and an oxidant, a fuel supplier supplying the electricity generating element with the fuel, an oxidant supplier supplying the electricity generating element with the oxidant, and a desulfurizing device coupled to the fuel supplier. The desulfurizing device includes a dehydrating element and a desulfurizing element. The fuel flows through the dehydrating element, and the dehydrating element absorbs moisture included in the fuel. The desulfurizing element absorbs a sulfur compound included in the fuel flowing out of the dehydrating element if temperature of the desulfurizing element is below a predetermined temperature, or desorbs a sulfur compound included in the desulfurizing element whenever the desulfurizing element is heated above the predetermined temperature.

The fuel cell system may include a plurality of another desulfurizing devices. The desulfurizing device and the plurality of another desulfurizing devices are connected in parallel with each other. At least one among the desulfurizing device and the plurality of another desulfurizing devices is not heated to absorb the sulfur compound, while the remaining ones are heated to desorb a sulfur compound.

The fuel can be supplied from the fuel supplier to the electricity generating element through the desulfurizing device.

The fuel cell system may further include a reformer that can generate hydrogen gas from the fuel. Herein, the fuel may be supplied from the fuel supplier to the reformer through the desulfurizing device. The desulfurizing device may be heated by gas released from the reformer. The predetermined temperature may be higher than 200 °C and lower than 400 °C.

According to a further aspect of the present invention, there is provided a desulfurizing device for a fuel cell comprising:a dehydrating element for absorbing moisture present in a fuel; and a desulfurizing element for absorbing a sulfur compound present in a fuel, the device being adapted to allow the fuel to contact the dehydrating element before the desulfurizing element.

According to another aspect of the present invention, there is provided a method of increasing the efficiency of a fuel cell, which comprises a step of contacting a fuel with a desulfurizing device according to the invention in its last mentioned aspect prior to a reformer.

Further preferred embodiments of the present invention in any of its various aspects are as described below or as defined in the sub-claims.

A more complete appreciation of the invention and many of the attendant advantages thereof, will be readily apparent as the same becomes better understood by reference to the following detailed description when considered in conjunction with the accompanying drawings, wherein:
FIGURE 1 is a schematic view showing a structure of a fuel cell system constructed as one embodiment of the present invention.
FIGURE 2 is an exploded perspective view showing the structure of the stack illustrated in FIGURE 1.
FIGURE 3 is a cross-sectional view showing the structure of the desulfurizing device illustrated in FIGURE 1.
FIGURE 4 is a cross-sectional view of the desulfurizing device constructed as a second embodiment of the present invention.
FIGURE 5 is a cross-sectional view of the desulfurizing device of the second embodiment of the present invention that is operated while the device is being heated.
FIGURE 6 shows a gas chromatography analysis result of a commercially available liquid petroleum gas.
FIGURE 7 shows a performance analysis result of a desulfurizing device according to Comparative Examples 1 and 2 and Example 1.

The desulfurizing device for a fuel cell according to a first embodiment includes a dehydrating element selectively absorbing moisture included in a fuel cell, and a desulfurizing element absorbing a sulfur compound included in the fuel that passed through the dehydrating element.

When the fuel includes an unpurified fuel, such as natural gas, city gas, liquid petroleum gas (LPG), naphtha, and the like, the unpurified fuel includes a small amount of an organic sulfur compound that is naturally generated, or a sulfur compound, such as mercaptan or thiophene, that is added as an odorizer. This small amount of the sulfur compound can generate hydrogen, which can damage all catalysts by poisoning them. Accordingly, the amount of sulfur compound included in the fuel should be decreased to less than 100ppm to suppress the above damage.

A conventional desulfurizing device for a fuel cell includes a single filter layer including a desulfurizing material, so that the desulfurizing material can remove the sulfur compound included in the fuel. However, the fuel also includes moisture, and the moisture is competitively absorbed by the desulfurizing material, sharply decreasing the absorption performance of the sulfur compound.

According to an embodiment of the present invention, a desulfurizing device includes a dehydrating element for selectively absorbing moisture, through which a fuel can pass to remove the moisture before it is supplied to a desulfurizing element, resultantly improving its desulfurization performance.

The dehydrating element and the desulfurizing element may have a different volume ratio depending on the amount ratio of moisture and the sulfur compound included in the fuel and performance of the dehydrating element. In other words, if a fuel includes moisture and a sulfur compound in the same ratio, the dehydrating and desulfurizing elements can have the same volume ratio. However, if the dehydrating element has excellent performance, it can have a smaller volume than the desulfurizing element.

Considering a commercially available fuel component and better performance of a dehydrating material than a desulfurizing material, the dehydrating and desulfurizing elements may have a volume ratio ranging from 1 : 10 to 5 : 3, but according to another embodiment, they may have a volume ratio ranging from 1 : 5 to 5 : 5. In other words, in the desulfurizing device, the volume ratio of the dehydrating element to the desulfurizing element can be a ratio such as 1 : 10, 1 : 5, 2 : 5, 3 : 5, 4 : 5, 5 : 5, 5 : 4, or 5 : 3.

In general, when a fuel includes less moisture, it can have better efficiency. However, an actual fuel includes moisture and a sulfur compound in a similar volume ratio.

Accordingly, the above ratios between the dehydrating and desulfurizing elements can be decided considering a similar ratio between moisture and the sulfur compound and, at most, considering 10 times better performance of the dehydrating element than the desulfurizing element.

The dehydrating element includes a dehydrating material selectively absorbing moisture. The dehydrating material may include any conventional one. The dehydrating material may be particularly selected from the group consisting of drierite; A-type zeolite; a silica gel; 3A, 4A, and 5A molecular sieves; and a combination thereof. The dehydrating material is conventionally well-known and does not need more detailed description.

The dehydrating material can have various pore sizes to selectively remove moisture, considering the molecular size of the sulfur compound. However, considering the molecular size of a conventional odorizer, the dehydrating material may have a pore size of less than 0.5nm. According to another embodiment, it may have a pore size ranging from 0.1 to 0.4nm. In other words, the dehydrating material may have a pore size of 0.1nm, 0.2nm, 0.3nm, 0.4nm, or 0.5nm. When the dehydrating material has a pore size within the above range, it has little physical and chemical absorption force against the sulfur compound, and thereby can more selectively absorb moisture.

The desulfurizing element includes a desulfurizing material absorbing a sulfur compound. The desulfurizing material may include any conventional one. In particular, the desulfurizing material may include one selected from the group consisting of Ag, Cu, Zn, Fe, Co, or Ni supported in hydrophobic zeolite; Ag or Cu supported in Y-type zeolite, ß-type zeolite, or X-type zeolite; a molecular sieve 13X; a copper-zinc-based desulfurizing material; copper supported on a porous carrier; or the like. The desulfurizing materials are conventionally well-known and do not need more detailed description.

The desulfurizing material may be ion-exchanged with a metal selected from the group consisting of a noble metal, a transition element, and combinations thereof. When the desulfurizing material is ion-exchanged by a metal selected from the group consisting of a noble metal, a transition element, and combinations thereof, a sulfur compound is absorbed in the desulfurizing material, and thereby changes the color of the desulfurizing material.

In general, a desulfurizing material is necessarily replaced at particular intervals. However, it is hard to decide the replacement time for a common desulfurizing material. At present, the replacement time for a desulfurizing material is decided by calculating the predictable absorption amount against its performance. However, different fuels include different amounts of a sulfur compound, and therefore, there is a problem of continuously checking the cumulative time of the desulfurizing material.

On the other hand, a desulfurizing material, which is ion-exchanged with a metal selected from the group consisting of a noble metal, a transition element, and combinations thereof, has the advantage of demonstrating its replacement time through a color change. The noble metal may be selected from the group consisting of Ag, Pt, Pd, and combinations thereof. The transition element may be selected from the group consisting of Co, Ni, Fe, and combinations thereof.

The desulfurizing material ion-exchanged with a metal can be included as the whole amount of the desulfurizing element, or a small amount of the desulfurizing material ion-exchanged with a metal can be blended with a desulfurizing material that is not ion-exchanged with the metal. Because the desulfurizing material ion-exchanged with a metal is more expensive than the desulfurizing material not ion-exchanged with the metal, it could be economically advantageous to use a small amount of the desulfurizing material ion-exchanged with a metal.

The desulfurizing material can have various pore sizes to efficiently remove the sulfur compound, considering the molecular size of the sulfur compound. However, considering the molecular size of a popular odorizer, the desulfurizing material may have a pore size of more than 0.5nm. According to another embodiment, it may have a pore size ranging from 0.5 to 1.0nm. In other words, the desulfurizing material can have various pore sizes such as 0.5nm, 0.6nm, 0.7nm, 0.8nm, 0.9nm, and 1.0nm. When the desulfurizing material has a pore size within the above range, it can better absorb mercaptan and thiophene used as the odorizer. On the other hand, when it has too large a pore size, it may have poor physical absorption and a decreased surface area.

The fuel may be a hydrocarbon fuel. The hydrocarbon fuel may include any conventional one used for a fuel cell. When the hydrocarbon fuel is selected from the group consisting of natural gas, city gas, liquid petroleum gas (LPG), naphtha, and combinations thereof, it may further include a naturally-generated organic sulfur compound or an artificially-added odorizer.

According to a second embodiment of the present invention, a desulfurizing device includes a dehydrating element selectively absorbing moisture included in a fuel and a desulfurizing element absorbing a sulfur compound included in the fuel that passed through the dehydrating element. The desulfurizing element includes a desulfurizing material that absorbs a sulfur compound when the element is not heated, and desorbs a sulfur compound if the element is heated.

In general, a desulfurizing material is necessarily replaced at particular intervals. However, it is hard to decide a replacement time for a common desulfurizing material. At present, the replacement time for a desulfurizing material is decided by calculating predictable absorption amount against the performance. However, since different fuels include various amounts of the sulfur compound, there is a problem of continually checking the cumulative time of the desulfurizing material.

According to the second embodiment of present invention, a desulfurizing device is a recycling type device including a desulfurizing element absorbing a sulfur compound when not heated, and desorbing the sulfur compound when heated. Since the desulfurizing device can half-permanently maintain its removal function of the sulfur compound, it does not need to have the desulfurizing material replaced and can alleviate performance deterioration of a system due to saturation of the desulfurizing material.

The heating is performed at a temperature of 200 to 400°C. When the heating is performed at a temperature of lower than 200°C, it may slow down the desorption reaction or completely hinder it. On the other hand, when it is performed at a temperature of higher than 400°C, it may change a property of the desulfurizing material and a container for a desulfurization filter.

Examples of the desulfurizing material that absorbs the sulfur compound when the material is not heated, and desorbs the sulfur compound if the material is heated may be selected from the group consisting of Ag, Cu, Zn, Fe, Co, or Ni supported on hydrophobic zeolite; Ag or Cu supported in Y-type zeolite, ß-type zeolite, or X-type zeolite; a molecular sieve 13X; a copper-zinc-based desulfurizing material; copper supported on a porous carrier; or the like.

The desulfurizing element, absorbing the sulfur compound when not heated and desorbing the sulfur compound when heated, has acid sites, and thereby can have an acid-base combination with the sulfur compound. Accordingly, it can easily absorb the sulfur compound, and also can smoothly desorb the sulfur compound by heating the element at a temperature ranging from 200 to 400°C.

In addition, when it is supported on a metal component, the metal component has a covalent bond with the sulfur compound, improving its absorption performance. According to the embodiment of the present invention, the metal component may be Ag or transition elements.

According to a third embodiment of the present invention, the provided is a fuel cell system that includes at least one electricity generating element producing electricity through a reaction of a fuel and an oxidant, a fuel supplier supplying the electricity generating element with the fuel, an oxidant supplier supplying the electricity generating element with the oxidant, and a desulfurizing device including a dehydrating element selectively absorbing moisture included in the fuel and a desulfurizing element absorbing a sulfur compound included in the fuel. The fuel may be supplied from the fuel supplier to the electricity generating element through the desulfurizing device.

A fuel cell system according to a fourth embodiment of the present invention includes at least one electricity generating element producing electricity through an electrochemical reaction of a fuel and an oxidant, a fuel supplier supplying the electricity generating element with the fuel, an oxidant supplier supplying the electricity generating element with the oxidant, a dehydrating element selectively absorbing moisture included in the fuel and a desulfurizing element absorbing a sulfur compound included in the fuel that passed through the dehydrating element. The desulfurizing element includes a desulfurizing material that absorbs a sulfur compound when not heated and desorbs a sulfur compound with heated.

The fuel cell system includes a plurality of desulfurizing devices that are connected in parallel with each other. While at least one of a plurality of desulfurizing devices is not heated to absorb a sulfur compound, the remaining ones among the plurality of desulfurizing devices may be heated to desorb a sulfur compound. The fuel may be supplied from the fuel supplier to the electricity generating element via the desulfurizing device.

The fuel cell system may further include a reformer that can generate hydrogen gas from the fuel. Herein, the fuel may be supplied from the fuel supplier to the reformer through the desulfurizing device. The desulfurizing device can be heated by using a released gas from a reformer. The desulfurizing device of the present invention, however, can be constructed to have another heating source other than the reformer.

Hereinafter, one embodiment of the present invention is illustrated in more detail with reference to the accompanying drawings, so that those who have common knowledge in this related field can easily understand. However, the present invention can be realized in various ways and is not limited thereto.

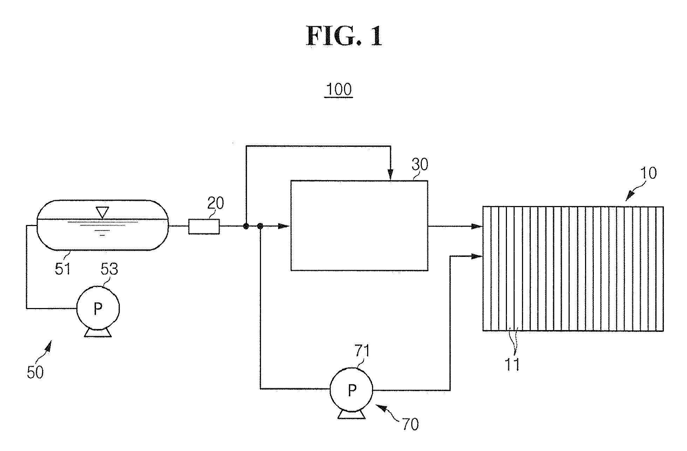

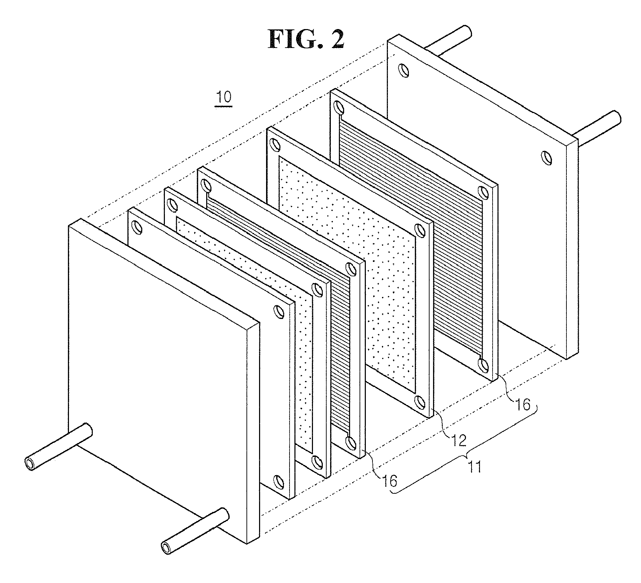

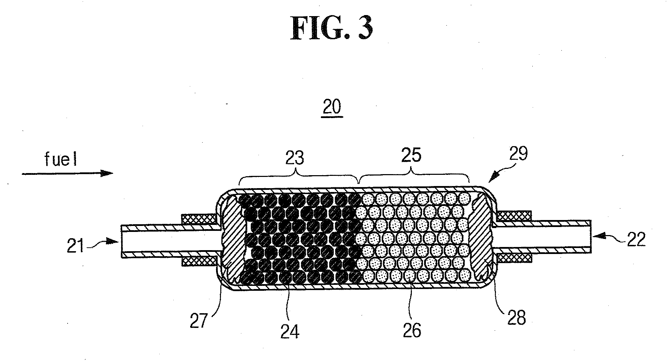

FIGURE 1 is a schematic cross-sectional view showing a structure of a fuel cell system 100 constructed as one embodiment of the present invention, FIGURE 2 is an exploded perspective view showing a structure of a stack 10 illustrated in FIGURE 1, and FIGURE 3 is a cross-sectional view showing a structure of a desulfurizing device 20 illustrated in FIGURE 1. Referring to FIGURES 1 to 3, the schematic structure of a fuel cell system 100 according to one embodiment of the present invention is described as follows.

Referring to FIGURE 1, the fuel cell system 100 is fabricated by employing a polymer electrode membrane fuel cell (PEMFC), which modifies a fuel including hydrogen, and thereby generates hydrogen and also electricity through oxidation of the hydrogen and reduction of an oxidant. In the fuel cell system 100, an oxidant can be air including oxygen or oxygen kept in a separate storage.

According to the embodiment of the present invention, a fuel cell system 100 includes an electricity generating element 11 generating electricity through reduction of an oxidant and oxidation of a gas modified through a reformer 30, a fuel supplier 50 supplying the reformer 30 with a fuel, the reformer 30 generating hydrogen by modifying the fuel and supplying the electricity generating element 11 with the hydrogen, an oxidant supplier 70 supplying the electricity generating element 11 and the reformer 30 with the oxidant, and a desulfurizing device 20 absorbing a sulfur compound included in the fuel. A plurality of the electricity generating elements 11 is stacked together to form the stack 10.

When the fuel cell system 100 with the above structure is operated, hydrogen generated from the reformer 30 is supplied to the electricity generating elements 11 of the stack 10, and an oxidant is supplied to the electricity generating elements 11 from the oxidant supplier 70. Then, electricity is generated through oxidation of the hydrogen and reduction of the oxidant in the stack 10.

The reformer 30 has a structure of generating hydrogen from a fuel including the hydrogen and supplying the hydrogen to the stack 10. The reformer 30 generates hydrogen through steam reforming (SR), an autothermal reforming reaction (ATR), or partial oxidation (POX), and supplies the hydrogen to the stack 10. In addition, the reformer 30 can further include a carbon monoxide reducing element (not illustrated) selectively oxidizing carbon monoxide.

On the other hand, a fuel supplier 50 supplying the reformer 30 with the fuel includes a fuel tank 51 storing the fuel and a fuel pump 53 connected to the fuel tank 51 and releasing the fuel therefrom. The oxidant supplier 70 includes an oxidant pump 71 absorbing the oxidant with a predetermined pumping force and respectively supplying the oxidant to the electricity generating element 11 and the reformer 30. As shown in FIGURE 1, the oxidant supplier 70 has a structure of supplying the oxidant to the stack 10 and the reformer 30 through a single oxidant pump 71 but can be equipped with a pair of oxidant pumps respectively connected to the stack 10 and the reformer 30.

Referring to FIGURE 2, the stack 10 is formed by stacking electricity generating elements 11. The electricity generating element 11 can be used to form a unit fuel cell by positioning a membrane-electrode assembly (MEA) 12 in the center and disposing a separator (or a bipolar plate) 16 at each side thereof.

Herein, the membrane-electrode assembly 12 has a predetermined active area for an electrochemical reaction of hydrogen and an oxidant, and includes an anode at one side and a cathode at the other side and an electrolyte membrane therebetween. Herein, the anode plays a role of oxidizing hydrogen, and thereby changing it into protons and electrons. On the other hand, the cathode reduces the protons and an oxidant, and thereby generates heat at a predetermined temperature and moisture. In addition, the electrolyte membrane plays a role of transferring protons produced at the anode to the cathode. The separator 16 plays a role of supplying the hydrogen and the oxidant to both sides of the membrane-electrode assembly 12, and also works as a conductor connecting the anode and the cathode in series.

Referring to FIGURE 3, the desulfurizing device 20 can be fabricated as a pipe-shaped reactor 29 with a predetermined fuel inlet 21 and fuel outlet 22. The desulfurizing device 20 includes a dehydrating element 23 including a dehydrating material selectively absorbing moisture included in the fuel and a desulfurizing element 25 including a desulfurizing material 26 selectively absorbing a sulfur compound included in the fuel. In addition, the desulfurizing device 20 can further include filters 27 and 28 positioned at the fuel inlet 21 and the fuel outlet 22. The filters 27 and 28 can be a mesh in order to completely catch a dehydrating material 24 and a desulfurizing material 26.

The fuel inlet 21 is connected to the fuel supplier 50, and the fuel outlet 22 can be connected to the reformer 30. In addition, the dehydrating element 23 may partially take an internal space of the pipe-shaped reactor 29 from the fuel inlet 21. The desulfurizing element 25 also may partially take an internal space of the pipe-shaped reactor 29 from the dehydrating element 23 to the fuel outlet 22. Accordingly, the fuel is injected through the fuel inlet 21 to the pipe-shaped reactor 29, passes the dehydrating element 23 and thereafter the desulfurizing element 25, and is released through the fuel outlet 22 out of the pipe-shaped reactor 29.

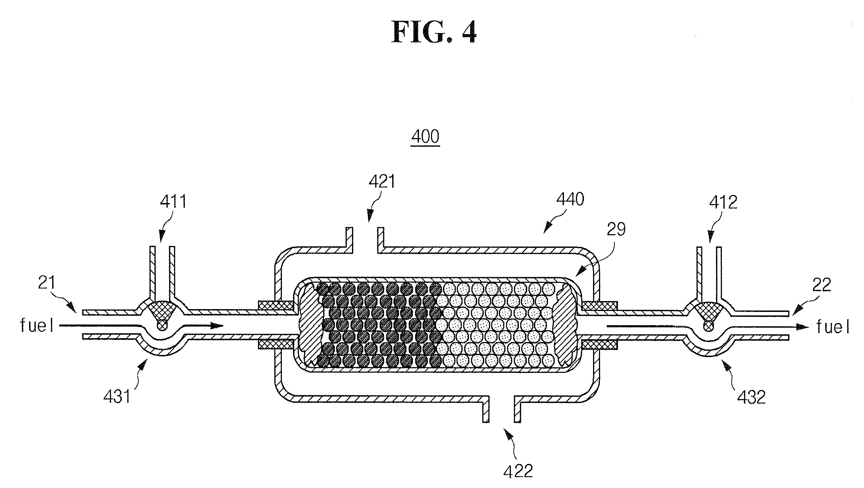

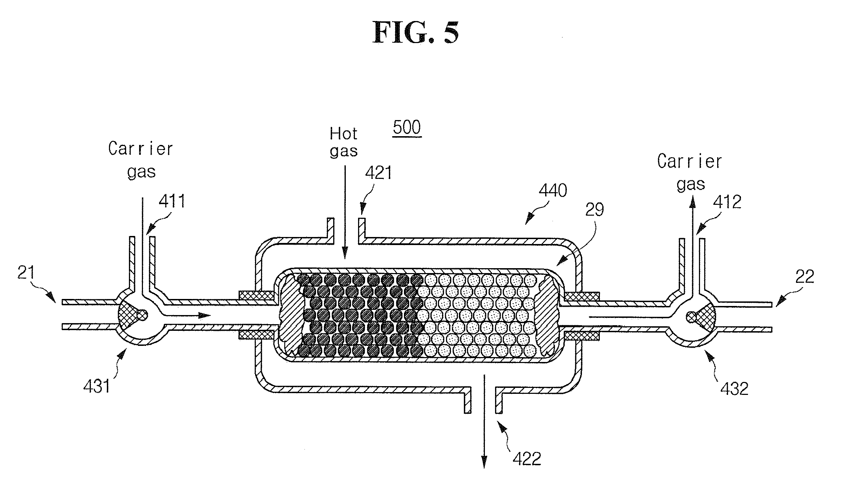

FIGURE 4 is a cross-sectional view of the desulfurizing device of a second embodiment of the present invention that is operated while the device is not heated, and FIGURE 5 is a cross-sectional view of the desulfurizing device according to the second embodiment of the present invention that is operated while the device is heated. In FIGURES 4 and 5, the same members are assigned as the same reference numerals as in FIGURE 3.

Referring to FIGURE 4, the desulfurizing device 400 includes a desulfurizing element that absorbs a sulfur compound when the desulfurizing element is not heated and desorbs a sulfur compound when the element is heated. The desulfurizing device 400 includes a first valve 431 and a second valve 432. The first valve 431 is capable of alternatively connecting the fuel inlet 21 or a carrier gas inlet 411 to the pipe-typed reactor 29, and a second valve 432 is capable of alternatively connecting the fuel outlet 22 or the carrier gas outlet 412 to the pipe-typed reactor 29.

A carrier gas that can be supplied through the carrier gas inlet 411 delivers a sulfur compound desorbed from a desulfurizing material and may include air or an oxidant used for a fuel cell system.

In addition, when the desulfurizing device 400 is heated by exchanging heat with a reformer-released gas, it may further include a heating gas inlet 421 and a heating gas outlet 422 for flowing the reformer-released gas and a housing 440 surrounding the pipe-type reactor. When the desulfurizing device 400 is not heated, the first valve 431 connects the fuel inlet 21 to the pipe-type reactor 29, so that a fuel can be supplied inside the pipe-shaped reactor 29, and then, a desulfurizing material can absorb a sulfur compound included in the fuel. In addition, the second valve 432 connects the pipe-type reactor 29 to the fuel outlet 22, so that the fuel can be released through the fuel outlet 22.

Referring to FIGURE 5, when the desulfurizing device 400 is heated, the first valve 431 connects the carrier gas inlet 411 to the pipe-shaped reactor 29, so that carrier gas can be supplied inside the reactor 29, and thereby carries a sulfur compound desorbed from the desulfurizing material. In addition, the second valve 432 connects the pipe-shaped reactor 29 to the carrier gas outlet 412, so that carrier gas can be released through the carrier gas outlet 412.

Gas released from the reformer, which is over 250°C, is delivered into the housing 440 through the heating gas inlet 421. The gas heats a desulfurizing element while passing the inside of the housing 440, and then is released through the heating gas outlet 422.

The following examples illustrate the present invention in more detail. However, the following examples are only exemplary embodiments of the present invention and it is not necessarily limited thereto.

### Sulfur compound analysis of commercially-available liquid petroleum gas

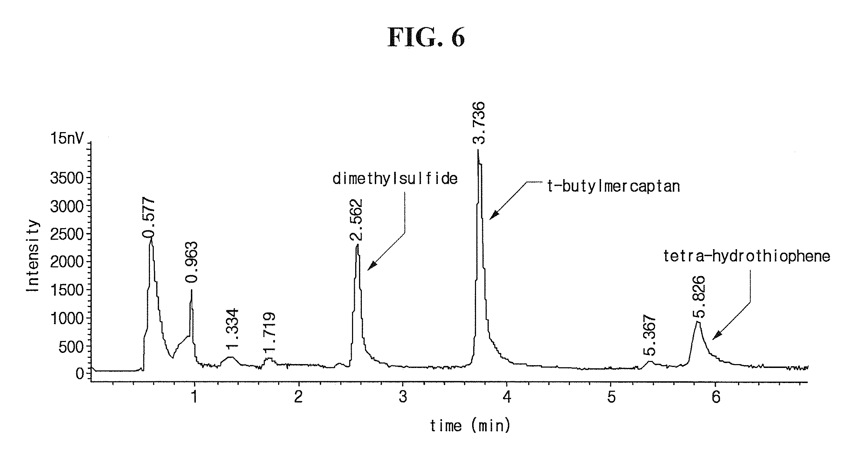

A sulfur compound included in petroleum gas was examined regarding its kind and amount by using gas chromatography (GC). The result is shown in FIGURE 6. Referring to FIGURE 6, a sulfur compound such as dimethylsulfide, t-butylmercaptan, and tetrahydrothiophene was detected. Its amount was about 50ppm.

Fabrication of a desulfurizing device and evaluation of its performance

### Comparative Example 1

A molecular sieve 4A (UOP Co.) was stuffed in a reactor, and then, a commercially available liquid petroleum gas was allowed to flow through it. In the reactor, a sulfur compound was examined to detect the saturated absorption movement by using a sulfur chemiluminescence detector (SCD).

### Comparative Example 2

A sulfur compound was examined to detect its saturated absorption movement with the same method as in Comparative Example 1 except that a molecular sieve 13X (UOP Co.) was stuffed in a reactor.

### Example 1

A sulfur compound was examined to detect its saturated absorption movement with the same method as in Comparative Example 1 except that a molecular sieve 4A and a molecular sieve 13X were stuffed in a reactor in a volume ratio of 5 : 5, and then, a commercially available liquid petroleum gas was allowed to flow through it.

### Example 2

A sulfur compound was examined to detect its saturated absorption movement with the same method as in Example 1 except that a molecular sieve 4A and a molecular sieve 13X were stuffed in a reactor in a volume ratio of 4 : 5.

### Example 3

A sulfur compound was examined to detect its saturated absorption movement with the same method as in Example 1 except that a molecular sieve 4A and a molecular sieve 13X were stuffed in a reactor in a volume ratio of 3 : 5.

### Example 4

A sulfur compound was examined to detect its saturated absorption movement with the same method as in Example 1 except that a molecular sieve 4A and a molecular sieve 13X were stuffed in a reactor in a volume ratio of 2 : 5.

### Example 5

A sulfur compound was examined to detect its saturated absorption movement with the same method as in Example 1 except that a molecular sieve 4A and a molecular sieve 13X were stuffed in a reactor in a volume ratio of 1 : 5.

### Example 6

A sulfur compound was examined to detect its saturated absorption movement with the same method as in Example 1 except that a molecular sieve 4A and a molecular sieve 13X were stuffed in a reactor in a volume ratio of 1 : 10.

### Example 7

A sulfur compound was examined to detect its saturated absorption movement with the same method as in Example 1 except that a molecular sieve 4A and a molecular sieve 13X were stuffed in a reactor in a volume ratio of 5 : 4.

### Example 8

A sulfur compound was examined to detect its saturated absorption movement with to the same method as in Example 1 except that a molecular sieve 4A and a molecular sieve 13X were stuffed in a reactor in a volume ratio of 5 : 3.

### Example 9

A sulfur compound was examined to detect its saturated absorption movement with the same method as in Example 1 except that a molecular sieve 4A and a molecular sieve 13X ion-exchanged with Ag were stuffed in a reactor in a volume ratio of 4 : 5.

### Example 10

A sulfur compound was examined to detect its saturated absorption movement with the same method as in Example 1 except that a molecular sieve 4A and a molecular sieve 13X ion-exchanged with Co were stuffed in a reactor in a volume ratio of 4 : 5.

### Example 11

A sulfur compound was examined to detect its saturated absorption movement with the same method as in Example 1 except that a molecular sieve 4A and a molecular sieve 13X ion-exchanged with Ni were stuffed in a reactor in a volume ratio of 4 : 5.

### Example 12

A sulfur compound was examined to detect its saturated absorption movement with the same method as in Example 1 except that a molecular sieve 4A and a molecular sieve 13X ion-exchanged with Fe were stuffed in a reactor in a volume ratio of 4 : 5.

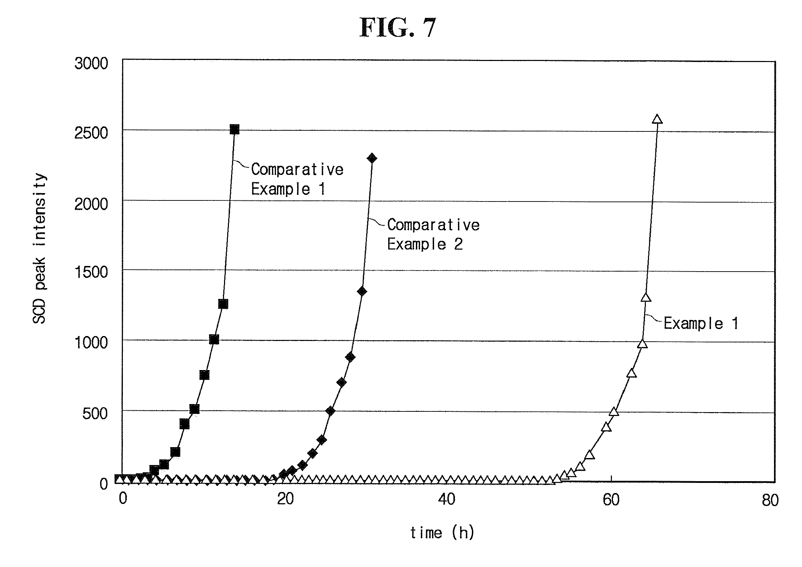

The desulfurizing devices of Comparative Examples 1 and 2 and Example 1 were examined to detect the saturated absorption movement of a sulfur compound by using a sulfur chemiluminescence detector (SCD). The results are shown in FIGURE 7.

Referring to FIGURE 7, the saturated movement of a sulfur compound was detected in the desulfurizing device of Comparative Example 1 after 1.5 hours since the beginning of the test. This movement seemed to come from the small pore size of the absorption material. In other words, since the sulfur compound has a bigger molecular size than the pore size of the absorption material, it must have been hardly absorbed therein. As for the desulfurizing device of Comparative Example 2, the saturated movement of the sulfur compound was detected after 20 hours.

As for the desulfurizing device of Example 1, the saturated movement of the sulfur compound was detected after much longer time. Accordingly, the desulfurizing device of Example 1 turned out to have over twice as improved absorption performance than the one of Comparative Example 1. This is more than 5 times based on a predetermined level. The desulfurizing devices of Examples 2 to 12 had a similar saturated absorption movement of a sulfur compound to that of the one of Example 1.

For the desulfurizing devices of Examples 9 to 12, the desulfurizing materials therein were found to have a color change as the sulfur compounds were absorbed. In particular, for the desulfurizing device of Example 11, the desulfurizing material therein was yellowish at first and then turned into dark brown, as the sulfur compound was absorbed.

Therefore, the present invention provides a desulfurizing device additionally including a dehydrating element that can selectively absorb moisture, and thereby can contribute to improving desulfurizing efficiency. In addition, it can decrease the volume of desulfurizing materials, and thereby a cost.

While this invention has been described in connection with certain exemplary embodiments thereof, it is to be understood that the invention is not limited to these embodiments, but, on the contrary, is intended to cover various modifications and equivalent arrangements included within the scope of the appended claims.

## Claims

1. A desulfurizing device for a fuel cell comprising:
a dehydrating element through which a fuel flows, the dehydrating element absorbing moisture included in the fuel; and
a desulfurizing element for absorbing a sulfur compound included in the fuel that flows out of the dehydrating element.

2. The desulfurizing device of claim 1, wherein the dehydrating element and the desulfurizing element have a volume ratio ranging from 1 :10 to 5 : 3.

3. The desulfurizing device of claims 1 or 2, wherein the dehydrating element comprises a material selected from the group consisting of drierite, A-type zeolite, a silica gel, a molecular sieve 3A, a molecular sieve 4A, a molecular sieve 5A, and combinations thereof.

4. The desulfurizing device of claims 1, 2 or 3, wherein the dehydrating material has a pore size of less than 0.5 nm.

5. The desulfurizing device of any one of claims 1 to 4, wherein the desulfurizing element comprises a material selected from the group consisting of Ag supported in hydrophobic zeolite, Cu supported in hydrophobic zeolite, Zn supported in hydrophobic zeolite, Fe supported in hydrophobic zeolite, Co supported in hydrophobic zeolite, Ni supported in hydrophobic zeolite, Ag supported in Y-type zeolite, Ag supported in ß-type zeolite, Ag supported in X-type zeolite, Cu supported in Y-type zeolite, Cu supported in ß-type zeolite, Cu supported in X-type zeolite, a molecular sieve 13X, a copper-zinc-based desulfurizing material, copper supported on a porous carrier and combinations thereof.

6. The desulfurizing device of any one of the preceding claims, wherein the desulfurizing material is ion-exchanged with a metal selected from the group consisting of a noble metal, a transition element, and combinations thereof.

7. The desulfurizing device of claim 6, wherein the noble metal is selected from the group consisting of Ag, Pt, Pd, and combinations thereof.

8. The desulfurizing device of claim 6, wherein the transition element is selected from the group consisting of Co, Ni, Fe, and combinations thereof.

9. The desulfurizing device of any one of the preceding claims, wherein the desulfurizing material has a pore size of more than 0.5 nm.

10. The desulfurizing device of any one of the preceding claims, wherein the fuel is a hydrocarbon fuel.

11. The desulfurizing device of claim 10, wherein the hydrocarbon fuel is selected from the group consisting of natural gas, city gas, liquid petroleum gas (LPG), naphtha, and combinations thereof.

12. The desulfurizing device of any one of the preceding claims, wherein the sulfur compound is selected from the group consisting of mercaptan, thiophene, and combinations thereof.

13. A desulfurizing device for a fuel cell comprising:
a dehydrating element through which a fuel flows, the dehydrating element absorbing moisture included in the fuel; and
a desulfurizing element for absorbing a sulfur compound included in the fuel flowing out of the dehydrating element if the temperature of the desulfurizing element is below a predetermined temperature, or for desorbing a sulfur compound included in the desulfurizing element whenever the desulfurizing element is heated above the predetermined temperature.

14. The desulfurizing device of claim 13, wherein the predetermined temperature is higher than 200 °C and lower than 400 °C.

15. A fuel cell system comprising:
at least one electricity generating element producing electricity through an electrochemical reaction of a fuel and an oxidant;
a fuel supplier supplying the electricity generating element with the fuel;
an oxidant supplier supplying the electricity generating element with the oxidant; and
a desulfurizing device coupled to the fuel supplier, the desulfurizing device comprising:
a dehydrating element through which the fuel flows, the dehydrating element absorbing moisture included in the fuel; and
a desulfurizing element for absorbing a sulfur compound included in the fuel flowing out of the dehydrating element.

16. The fuel cell system of claim 15, wherein the fuel is supplied from the fuel supplier to the electricity generating element through the desulfurizing device.

17. The fuel cell system of claims 15 or 16, further comprising a reformer for generating hydrogen gas from the fuel, the hydrogen gas being supplied to the electricity generating element, the fuel being supplied from a fuel supplier to the reformer through the desulfurizing device.

18. A fuel cell system comprising:
at least one electricity generating element producing electricity through an electrochemical reaction of a fuel and an oxidant;
a fuel supplier supplying the electricity generating element with the fuel;
an oxidant supplier supplying the electricity generating element with the oxidant; and
a desulfurizing device coupled to the fuel supplier, the desulfurizing device comprising:
a dehydrating element through which the fuel flows, the dehydrating element absorbing moisture included in the fuel; and
a desulfurizing element for absorbing a sulfur compound included in the fuel flowing out of the dehydrating element if the temperature of the desulfurizing element is below a predetermined temperature, or for desorbing a sulfur compound included the in the desulfurizing element whenever the desulfurizing element is heated above the predetermined temperature.

19. The fuel cell system of claim 18, the fuel cell system comprising a plurality of desulfurizing devices connected in parallel with each other.

20. The fuel cell system of claim 19, wherein at least one desulfurizing device is not heated to absorb the sulfur compound, while the remaining one(s) are heated to desorb a sulfur compound.

21. The fuel cell system of any one of claims 18 to 20, wherein the fuel is supplied from the fuel supplier to the electricity generating element through the desulfurizing device.

22. The fuel cell system of any one of claims 18 to 21, the fuel cell system further comprising a reformer for generating hydrogen gas from the fuel, the hydrogen gas being supplied to the electricity generating element, the fuel being supplied from the fuel supplier to the reformer through the desulfurizing device.

23. The fuel cell system of claim 22, wherein the desulfurizing device is heated by gas released from the reformer.

24. The fuel cell system of any one of claims 18 to 23, wherein the predetermined temperature is higher than 200 °C and lower than 400 °C.
